(19) Europäisches Patentamt
European Patent Office
Office européen des brevets

(11) **EP 1 835 749 A1**

(12) **EUROPEAN PATENT APPLICATION**

(43) Date of publication:
**19.09.2007 Bulletin 2007/38**

(51) Int Cl.:
***H04N 7/26*** (2006.01)

(21) Application number: **06300238.0**

(22) Date of filing: **16.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Thomson Licensing**
**92100 Boulogne-Billancourt (FR)**

(72) Inventors:
• **Lopez, Patrick**
  **35450 Livré sur Changeon (FR)**
• **Boisson, Guillaume**
  **35000 Rennes (FR)**
• **Burdin, Nicolas**
  **35700 Rennes (FR)**

(74) Representative: **Ruellan-Lemonnier, Brigitte Thomson,**
**European Patent Operations,**
**46 Quai Alphonse Le Gallo**
**92648 Boulogne Cedex (FR)**

(54) **Method for coding video data of a sequence of pictures**

(57)     The method implements an update step which is a selection among at least the following coding modes :
- a default coding mode which doesn't use the motion compensation for the calculation of the pixel if the pixel is not connected or which performs a low pass motion compensated temporal filtering of picture H (9) of same level if the pixel is connected,

- an update_MV coding mode which performs a low pass motion compensated temporal filtering of picture H (9) of same level according to a default motion vector calculated by taking into account motion vectors belonging to regions or pixels in the vicinity of the pixel to be calculated.

     Applications relate to video compression for transmission or storage of data.

**FIG. 1**

EP 1 835 749 A1

**Description**

The invention relates to a method and device for coding and decoding video data of a sequence of pictures implementing motion compensated temporal filtering and more particularly to the generation of lowpass pictures in the case of discrete wavelet transform.

In most of the current video coding algorithms, such as MPEG and/or t+2D wavelet based schemes, the first step consists in exploiting temporal correlation between successive pictures, after what the picture spatial correlation can be captured. Temporal redundancy is reduced using motion compensated transforms. This is known as Motion Compensated Temporal Filtering or MCTF. Spatial redundancy is reduced using spatial transform like, for instance, Discrete Cosine Transform or Discrete Wavelet Transform.

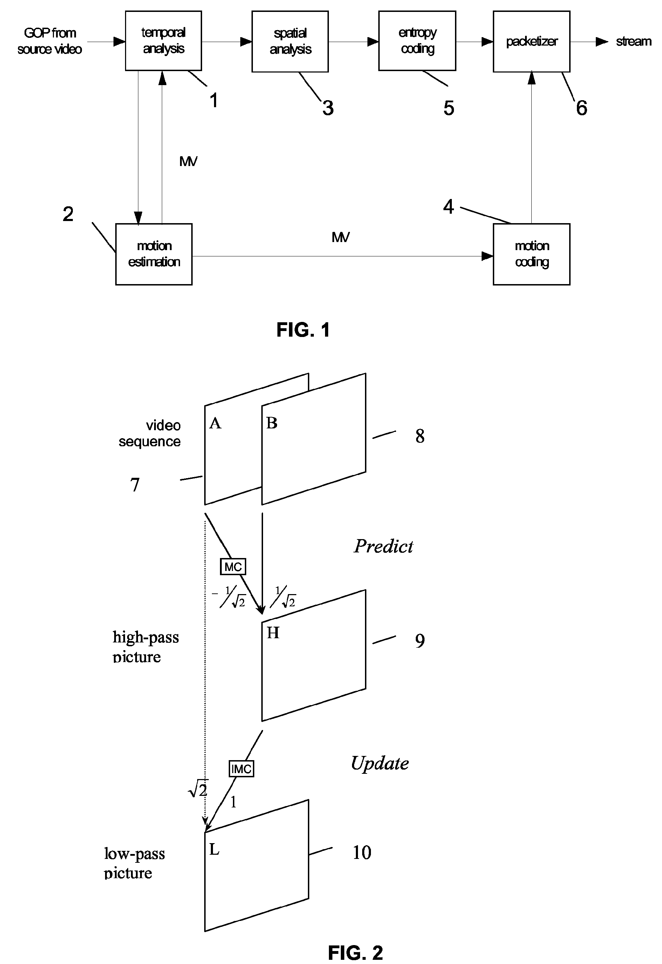

Figure 1 shows a known structure of a video encoding scheme. Prior to encoding, consecutive video pictures are usually divided into groups of pictures also known as GOP. A motion-compensated temporal analysis or MCTF circuit 1 achieves such a filtering to get the different temporal frequency bands. A motion estimation circuit 2 receives the pictures from the temporal analysis circuit to calculate the motion estimation (ME), generating motion vectors (MV). Motion estimation uses either forward or backward or bidirectional referencing. Motion vectors are transmitted to the temporal analysis circuit which performs the motion compensation. They are also transmitted to a motion coding circuit 4 to be encoded before transmission.

The resulting "pictures" from the temporal analysis circuit 1 are processed through a spatial analysis circuit 3 implementing for example a Discrete Wavelet Transform (DWT) or a Discrete Cosine Transform (DCT). Coefficients resulting from the complete temporal/spatial analysis are finally encoded using an entropy coder 5. A final merger circuit, packetizer 6, concatenates the resulting encoded coefficients and motion vectors to get the final output stream.

Motion Compensated Temporal Filtering techniques analyze, i.e. filter, sets of $n$ successive video pictures and produce subsets of temporal low frequency pictures and high frequency pictures and associated motion fields, i.e. set of motion vectors between the filtered sets of $n$ pictures.

Discrete Wavelet Transform (DWT), a known analysis technique, is an iterative method for breaking a signal or a series of values into spectral components, by filtering the values. Thereby it is possible to view the series of values in different resolutions corresponding to frequencies, or subbands of the spectrum.

The implementation of the temporal filtering can be done either by a classical convolutive method or by using the so-called "lifting scheme". The latter method is commonly used due to its flexibility, reversibility, fastness, and low memory usage.

An elementary lifting stage is the sequence of a "predict" step and an "update" step. A complete lifting scheme consists of one or several elementary lifting stages. Let's consider short temporal filtering, i.e. 2-tap filters, that only applies on pair of pictures, such as the so-called "Haar filtering". Note that Haar filters can be interpreted as a 2/2 filter-bank.

If we consider a pair of pictures A and B, the process consists in applying a high pass filter and a low pass filter in order to get a high frequency band picture H and a low frequency band picture L. These two steps correspond in this filtering to equations (1),

$$(1) \quad \begin{cases} H = \dfrac{B - MC_{A \leftarrow B}(A)}{\sqrt{2}} & \text{(Predict Step)} \\ L = \sqrt{2}.A + MC_{A \leftarrow B}^{-1}(H) & \text{(Update Step)} \end{cases}$$

where $MC_{I1 \leftarrow I2}(F)$ corresponds to the motion compensation of a picture F, using the motion field estimated between pictures $I_2$ and $I_1$.

This process is depicted in figure 2 where pictures A and B are referenced 7 and 8. To get the high frequency band picture H, high-pass picture 9, the motion between picture B and picture A is needed. It corresponds to the backward motion vectors starting from B, A being considered as the reference picture.

To get the low frequency band picture L, low-pass picture 10, the motion between picture A and B is needed. It corresponds to the forward motion vectors starting from A, A being considered as the reference picture. Practically, only one motion field is generally estimated, for instance motion field from B to A, the other being deduced using inverted motion vectors ($MC^{-1}$).

This filtering is implemented on the pixels of the picture A and B or on the macroblocks of these pictures.

An improvement of this calculation consists in the implementation of the filtering, for the L pictures, only for connected pixels or blocks. As a starting point, the implementation of the filtering, for the L pictures, is available only for connected pixels or blocks. A pixel or block is said connected if at least one motion vector (MV) is pointing to this pixel or block. When a pixel or block is not connected, i.e. if no MV is pointing to this pixel or block, an intra coding and a scaling are performed.

$$L = \sqrt{2} * A$$

In that case, i.e. if a pixel or block is not connected, the H picture is not involved for the computation of the pixel or block (i, j) of L. It can be considered that this pixel or block is not updated.

Thus, there exist basically two different modes for the L picture construction:

- the normal update mode,
- the no-update mode.

In simplest implementations, either mode is selected depending on the pixel, or the block, in picture L is connected or not. Since both the encoder and the decoder know whether the pixel, or the block, is connected, they will choose implicitly the same mode when building the L picture.

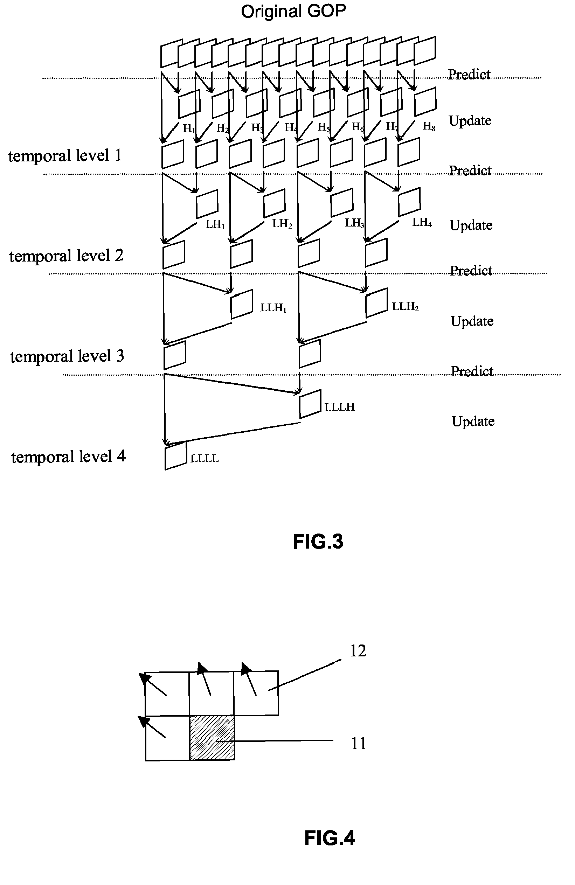

Figure 3 illustrates an example of Haar filtering for a GOP corresponding to 16 pictures.

On this figure, the first line of pictures corresponds to the original GOP. The second and third lines of pictures correspond to the temporal level 1, the following pairs of lines (4, 5), (6, 7) and (8, 9) correspond respectively to the temporal levels 2, 3 and 4.

The application of the "Haar filtering" is performed on each pair of pictures in the original GOP, to produce, at temporal level 1, temporal high frequency (H) and low frequency (L) pictures. For a given temporal level, the first line of the pair represents the pictures obtained through a predict step, the second line represents the pictures obtained through an update step, following the predict step. In other words, the first line represents the temporal high frequency pictures and the second line represents the temporal low frequency pictures.

High frequency pictures at a temporal level n are obtained by processing temporal low frequency pictures at level n-1, through a predict step. For n=1, the low frequency pictures are the original pictures.

Low frequency pictures at a temporal level n are obtained by processing temporal low frequency pictures at level n-1 and temporal high frequency pictures obtained at level n, through an update step. For n=1, the low frequency pictures are the original pictures.

The pictures transmitted by the temporal analysis circuit 1 are the temporal low frequency picture from the lowest temporal level, LLLL at level 4, and the temporal high frequency pictures at each temporal level, LLLH at level 4, $LLH_1$ and $LLH_2$ at level 3, $LH_1$ to $LH_4$ at level 2 and $H_1$ to $H_8$ at level 1, a total of 16 pictures.

Relating to the update modes, this improvement using two modes for the building of L pictures is not always satisfactory. For instance, the mismatch of B and MC(A) may introduce some artifacts in the H picture. Since the L picture is built from the H picture, this artifact may have an incidence on the L picture, and increase the coding cost.

Another limitation of standard L building occurs when a large area of the picture contains only not connected pixels or blocks, except some isolated pixels or blocks. In this case, a blocking effect appears, especially at lower rates, around these boundaries between connected and not connected pixels.

Currently, the problem is addressed by techniques like Overlapped Block Motion Compensation known as OBMC, or transition filtering. These techniques aim at filtering the chosen vectors across the block neighboring. Such solutions, implemented to hide the artifacts, aren't satisfactory when considering the image quality.

An aim of our invention is to alleviate the aforesaid drawbacks.

Its subject is a method for coding video data of a sequence of pictures comprising a temporal analysis implementing a motion compensated temporal filtering of pictures according to motion vectors between pictures, said filtering comprising, to get a high frequency band picture H at a temporal level I, a predict step implementing high pass motion compensated temporal filtering of source or L pictures at lower temporal level I-1, characterized in that, to calculate a region or a pixel of a low frequency band picture L at a temporal level I, it implements an update step which is a selection among at least the following coding modes :

- a default coding mode which doesn't use the motion compensation for the calculation of the region or the pixel if the region or pixel is not connected or which performs a low pass motion compensated temporal filtering of picture H of same level if the region or pixel is connected,
- an update_MV coding mode which performs a low pass motion compensated temporal filtering of picture H of same level according to a default motion vector calculated by taking into account motion vectors belonging to regions or pixels in the vicinity of the region or pixel to be calculated.

According to a mode of implementation, the default motion vector is a first default motion vector calculated as a function of the motion vectors of regions or pixels in the vicinity.

According to a mode of implementation, the default motion vector is a second default motion vector which is a refined motion vector calculated by performing a motion estimation within an area of the H picture having a predetermined size, around the position corresponding to a prediction motion vector calculated as a function of the motion vectors in the vicinity.

According to a mode of implementation, the temporal decomposition being carried out on images at different spatial resolution levels, the coding mode is selected among another coding mode which performs a low pass motion compensated temporal filtering taking into account a third default motion vector per region or per pixel, calculated as a function of the motion vector attributed to the corresponding region or pixel of the corresponding picture at lower resolution.

According to a mode of implementation, the temporal decomposition being carried out on images at different spatial resolution levels, the coding mode is selected also among another coding mode which performs a low pass motion compensated temporal filtering taking into account a fourth default motion vector per region or per pixel, which is a refined motion vector calculated by performing a motion estimation within a area having a predetermined size, around the position corresponding to a prediction motion vector calculated as a function of the motion vector attributed to the corresponding region or pixel of the corresponding picture at lower resolution.

According to a mode of implementation, the selection is made at least among two of the coding modes corresponding to the first, second, third and fourth default motion vector.

According to a mode of implementation, another coding mode for the selection is the following:

- intra mode which consists in using a previously coded region or block of the L image as a predictor for the coding of the current region or block.

According to a mode of implementation, the temporal decomposition being carried out on images at different spatial resolution levels, another coding mode for the selection is the following:

- interlayer_pred mode which consists in using the corresponding low resolution region or block as a predictor for the coding of the current high resolution region or block.

According to a mode of implementation, a default motion vector for a pixel of a block is defined through a weighting matrix by weighting the inverse motion vector attributed to the block and inverse motion vectors attributed to blocks in the vicinity, the weighting values depending on the position of the pixel within the block.

According to a mode of implementation, a default motion vector for a pixel of a block is defined through parameters of an affine function, such affine function being calculated, for the block, according to inverse motion vectors pointing within this block.

According to a mode of implementation, a default motion vector for a pixel of a block is defined by the affine functions

$$u=a+bx+cy$$

$$v=d+ex+fy$$

where u and v are the components of the motion vector, x and y are the positions of the pixel within the block and a, b, c, d, e, f are parameters calculated by performing a mean square estimation or a robust regression taking into account inverse motion vectors pointing within the block.

According to a mode of implementation, the coding mode selection is a function of a criterion depending on the coding cost of the mode and/or the distortion of the reconstructed region or, for a pixel belonging to an image block, the reconstructed block.

According to a mode of implementation, a discrete wavelet transform is implemented through the motion compensated temporal filtering.

The invention also relates to a device for the coding of video data according to the process of claim 1, comprising a temporal analysis circuit to perform MCTF filtering of pictures, characterized in that said circuit comprises coding means for the coding of a region or a pixel of an L picture at a temporal level l according to an update_MV coding mode using a default motion vector.

The invention also relates to a method for decoding video data coded according to the previously described process, comprising a temporal synthesis motion compensated temporal filtering, characterized in that, for a temporal level and for an update step, said filtering performs an update_MV decoding mode using a default motion vector.

The invention also relates to a device for the decoding of video data coded according to the previously described process, comprising a temporal synthesis circuit for performing a temporal synthesis MCTF filtering, characterized in that said circuit comprises decoding means for performing, for a temporal level and for an update step, an update_MV decoding mode using a default motion vector.

The process offers more adaptability in the update step. More update modes are proposed. The L picture is divided in regions, for example blocks, and update modes are selected at a region level.

Thanks to the invention, image quality is improved, block artifacts are reduced. For a given image quality, compression rate is improved.

Other features and advantages of the invention will become clearly apparent in the following description given by way of non limiting examples and offered with regard to the appended figures which represent:

- figure 1, an overall architecture of a video coder,
- figure 2, a lifting scheme of Haar filtering,
- figure 3, a Haar filtering with a group of 16 pictures,
- figure 4, use of motion vectors computed for the adjacent blocks at the same resolution,
- figure 5, use of motion vectors computed for the adjacent blocks at the same resolution and for the same block at the lower resolution,
- figure 6, interlayer prediction mode,
- figure 7, intralayer prediction mode,
- figure 8, an overall architecture of a video decoder.

The temporal analysis circuit, referenced 1 in figure 1, carries out a Motion Compensated Temporal Filtering through a discrete wavelet transformation (DWT). It is supposed that such filtering is applied to pictures at low spatial resolution and pictures at high spatial resolution, source pictures being, for example, sub sampled before filtering. The output of the circuit provides H and L pictures at both resolutions.

A new process is proposed for the coding of the L pictures. It consists in two main steps, a first step for generating a default L picture by performing the classical update step, for instance classical update step for connected pixels and classical management of non-connected pixels with transition filtering, a second step for optimizing the L picture, consisting in analyzing the L picture, block by block, and in choosing the best mode among the default mode, which consists in keeping the block as it is after the first step, and new update modes.

A pixel of a L picture can be a connected or not connected pixel. The motion estimation is carried out between a first and a second L picture at a previous temporal level, a motion vector being calculated for each block of the second picture L. This motion vector calculated for a block is attributed to each pixel of the block of the H picture at the current level. The pixels of the picture L at the current temporal level are connected or not connected according to the pointing of the motion vectors, within this L picture, coming from the H picture at the current temporal level, in fact the inverse of these motion vectors as shown figure 2 (IMC). A pixel of the L frame can be not connected or connected and, if so, can be associated to more than one inverse motion vector.

The process consists in adding new update modes for the second step. These modes are described hereafter:

**- default mode:**

This mode, as indicated above, keeps the pixels of a block as they are after the first pass of the L generation

**- update_ MV mode:**

This enhanced mode consists in attributing a motion vector DMV, as Default Motion Vector, to pixels of the block, which are connected or non connected pixels, for performing the update step. Two sub-modes are proposed:

**- update_ MV_ default sub- mode:**

In this sub-mode, the motion vector MV attributed to each pixel of the block is deduced and is consequently not necessarily directly coded as same deduction is made on the decoder side. Several solutions are proposed:

A first solution is to determine a motion vector for the block to which belongs the pixel, obtained as a weighted or not-weighted sum of the inverted motion vectors or IMVs, used in the default update step for the connected pixels of the block and/or the motion vectors MVs already computed for the adjacent blocks at the same spatial resolution. For example, if two or more inverted motion vectors are pointing within the L block, an average of the components of these inverted motion vectors is carried out to calculate a new motion vector for the L block and to associate this calculated motion vector to the connected and/or non connected pixels.

Also, a weighting of these inverted motion vectors can be performed for this average, for example by taking into account the number of pixels associated to these inverted motion vectors within the L block.

Also, motion vectors associated to previously coded adjacent blocks, in the vicinity of the current block, can be used for the average. Figure 4 shows blocks 12 at spatial resolution n, adjacent to the current block 11 at the same spatial resolution n. Motion vectors associated to the adjacent blocks are used for the calculation of the motion vector MV associated to this current block, for example by implementing an average of the components.

Alternatively, another mode consists in using the inverted motion vector computed at a lower spatial resolution for the same block, if available. A refinement vector can additionally be encoded. A solution is to perform a motion estimation around the position corresponding to this motion vector, for example a block matching within a range, or search window size, linked to the resolution ratio, in order to refine this motion vector. The calculated motion vector MV corresponds to the motion vector at lower resolution plus a so-called refinement motion vector.

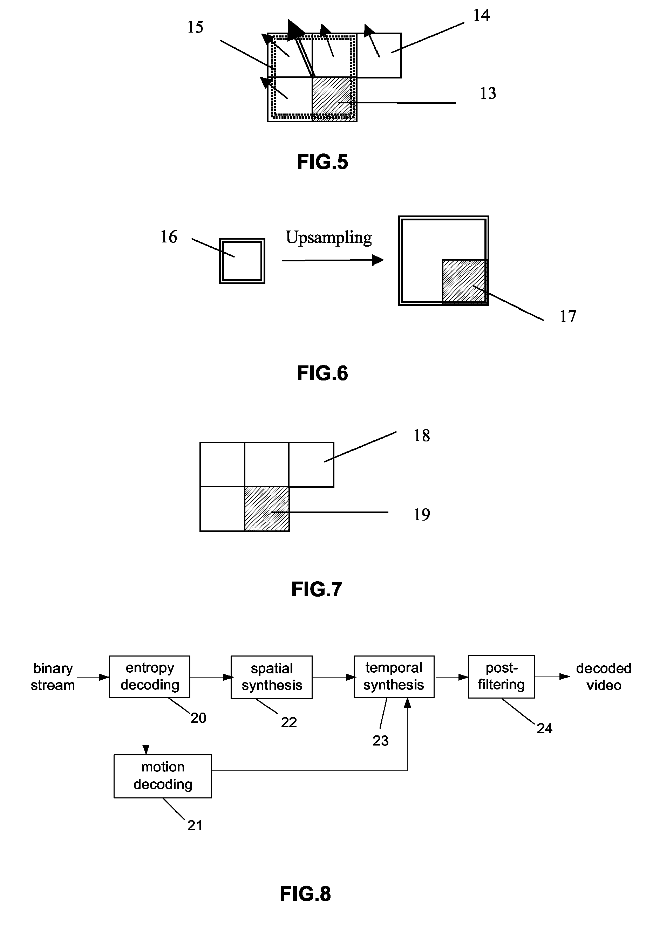

Figure 5 shows a current block 13 at spatial resolution n. Adjacent blocks 14 at the same resolution n have associated motion vectors $MV_n$. The block 15 at the spatial resolution n - 1, corresponding to the current block at the resolution n, has an associated motion vector $MV_{n-1}$. This motion vector $MV_{n-1}$ is used as motion vector associated to the current block at the resolution n. Also, this motion vector can be used as a predictor or prediction vector to initiate a search window for performing a block matching to calculate a refined motion estimation and refined motion vector MV. The coding of this motion vector MV can use a differential coding, transmitting only the refinement vector RMV.

Although a motion vector is attributed to the block, this motion vector can be different for the pixels of the block. For example, a motion vector is calculated, for a pixel, by weighting motion vectors of the adjacent blocks according to the position of the pixel within the block, i.e. the distance of this pixel to the adjacent blocks. This weighting can be the same for all the blocks and consequently, it is not necessary to transmit weighting matrixes for each block to the decoder. Such matrixes, available on the decoder side, can be predetermined. On the decoder side, the motion vector is calculated, for a pixel of a block, by weighting the motion vectors of adjacent blocks or blocks in the vicinity according to the position of the pixel within the block. The weighting can also be performed by taking into account the inverse motion vectors pointing within the block. In that case, the weighting matrix depends on the block.

Another solution allowing to send only some parameters for the coding of the motion vectors of pixels of a whole block is to use motion models, such as affine models. The components (u, v) of the motion vectors of each pixel (x, y) in the block are defined using motion parameters (a, b, c, d, e, f) by the following equations:

$$u = a + b.x + c.y$$

$$v = d + e.x + f.y$$

These parameters may be deduced from the inverted motion vectors IMVs used in the default update step, calculating, for instance, a mean square estimation or a robust estimation. A robust regression method can be used for the determination of the parameters. So, the inverted motion vectors pointing within the L block are processed to calculate the parameters. The affine function allows to attribute a motion vector to each pixel of the block although only parameters are sent to the decoder for the block.

**- update_ RMV sub- mode:**

In this sub-mode, a Refinement Motion Vector RMV is encoded. The update step is performed using, for each pixel of the block, a motion vector that is the sum of the default motion vector, or DMV, corresponding to the first pass mentioned above, and of the refinement motion vector RMV:

$$MV = DMV + RMV$$

For the refinement process, a solution is to perform a motion estimation around the position corresponding to the default motion vector DMV, for example a block matching within a narrow range, plus or minus 2 pixels is an example, in order to refine the DMV motion vector. The calculated motion vector MV corresponds to the DMV motion vector plus a so-called refinement motion vector. As the DMV vector is known on the decoder side, only the refinement motion vector needs to be sent.

### - interlayer_ pred mode:

Another enhanced mode consists in using an interlayer mode for the L block building. For this mode, the equivalent coded block in the lower spatial resolution is up-sampled and used as a predictor. The residue, which is the difference between the block L at high resolution and the predictor corresponding to the block L at the lower spatial resolution, is transmitted. Figure 6 represents a current block 17, in grey, at the spatial resolution level n and the current block 16 at the spatial resolution level n-1. This lower resolution block is used as predictor. Of course, it is supposed that the filtering at the different temporal levels is made for at least a low spatial resolution and a high spatial resolution.

### - intra mode:

In an intra mode called spatial-intra mode, the predictors consist of blocks at the same resolution layer in the neighboring of the block to be coded. These blocks have been already coded and thus the predictor can use either the original value or the reconstructed value. Figure 7 represents the current block 19, at resolution n, which uses the adjacent blocks 18 at the same spatial resolution level n, to perform the intra layer prediction. A residue corresponds to the difference between the current block and one of these predictors.

When building the L picture, all modes are computed for each region or block. After the optimal mode has been selected, some situations can occur where the chosen mode is varying across the adjacent regions. This situation will generate artifacts such as block artifacts if regions are image blocks. To avoid this degradation, an inter-region 2D filtering is achieved on the L picture. This filtering can be systematically applied on adjacent regions with different modes, or only for a subset of modes pairs, considering pairs of blocks.

In order to reduce the computation effort, once a mode has been selected for a region, a variant consists in computing only a subset of modes for the adjacent region. This subset of modes can be chosen in such a way that the artifact between adjacent regions will be reduced.

Once some or all modes have been computed for a region, a decision is taken in order to select the optimal mode. This decision is achieved a priori when building the region. In this case, the criterion to be used is based on the SAD, acronym of the expression Sum of Absolute Difference, which measures the distortion between the original picture and the reconstructed one.

Another criterion is based on the coding cost of the motion vectors MV.

A weighted sum of these criteria may be helpful for the decision. For instance, the following criterion can be used:

$$C(m) = D(m, \overline{p}(m)) + \lambda.R(m, p(m))$$

where m is the tested mode, p(m) corresponds to the associated parameters of the mode, for instance motion vectors, intra prediction direction..., D(m, p) is a measure of the distortion of the updated block, and R(m, p) is a measure of the coding cost of the mode and of its parameters.

A flag is inserted in the bitstream to inform the decoder which mode must be used for the decoding phase.

A tree approach can be used to describe the choice of the mode over the whole picture or on a part of the picture to be coded.

The invention also relates to a coding circuit as the one described in figure 1, with a temporal analysis circuit 1 implementing an algorithm carrying out the previously described method.

The invention also relates to a decoding process and a decoding circuit.

Figure 8 represents a decoding circuit. The binary stream corresponding to the video sequence coded according to the previously described process is successively transmitted to an entropy decoding circuit 20, a spatial synthesis circuit 22, a temporal synthesis circuit 23 and potentially a post-filtering circuit 24 to provide a decoded video. A motion decoding circuit 21 receives motion information and other coding information from the entropy decoding circuit and transmits these data to the temporal synthesis circuit 23.

The entropy decoding circuit 20 carries out the inverse operations of the entropy coding circuit. It decodes, among other things, the spatiotemporal coefficients and the filtering modes transmitted by the coder. Extracted motion information is sent to the motion decoding circuit, which decodes the motion vector fields. These motion fields are transmitted to the temporal synthesis circuit 23 in order to perform the motion-compensated synthesis from the different temporal frequency bands.

The spatial synthesis circuit 22 implements an inverse transform such as an inverse DCT or inverse DWT and transmits the data corresponding to the different temporal sub-bands, to the temporal synthesis circuit 23. That last circuit reconstructs the images by filtering these sub-bands through temporal synthesis filters. The MCTF temporal synthesis filtering implements a synthesis filtering. Pictures L and H coming from the spatial synthesis circuit are filtered to construct the L pictures at the temporal level I through the inverse of the update and predict steps. And again for calculating the L pictures at the temporal level I-1 with the reconstructed L pictures at level I and H pictures from the spatial synthesis circuit. The post-filtering circuit 24 allows, for example, decreasing artifacts such as block effects.

The MCTF temporal filtering circuit 23 receives information such as the flag in the bitstream informing about the mode to be used for the building of the images L. Data relating to the motion vectors used for the filtering, depending on the mode and sub-mode implemented for the coding, allow the calculation of the motion vectors needed for the update steps.

If the update_MV_default sub-mode is the one to be used by the decoder, the motion vector is calculated by this circuit depending on the solution implemented by the sub-mode at the coder, for example according to an average, weighted or not weighted, of the inverted motion vectors pointing within this block. In another solution, the motion vector is calculated according to the motion vectors of previously decoded adjacent block or by adding the transmitted refinement vector to the prediction vector relating to the corresponding block at lower resolution, if any. If an affine function is calculated at the coder, the transmitted parameters of the affine functions u and v are processed to calculate the components u and v of the motion vectors for the pixels of the block.

When the selected mode is interlayer_pred, the L picture at the high resolution is calculated by upsampling the decoded L picture at the low resolution and by adding the data corresponding to the residue to this upsampled picture. In intra mode, the residues are added to a previously decoded block in the same L picture.

Of course, the filtering to get the L picture can be performed at a pixel or block or region level. A block or region is declared connected if at least one of the inverted motion vectors from the blocks of the image H is pointing within the block or region. When the filtering is implemented at a block level, one default motion vector is calculated for the block or region. The motion vectors taken into account for the calculation of the update_MV coding mode of a block or region are the ones of the blocks or regions in its vicinity.

The process is not limited to the use of short temporal filtering. Long temporal filtering using for example 5 tap filters for the MCTF can also be used. The process can be implemented on field pictures or frame pictures, progressive or interlaced. Also, the process doesn't depend on the spatial analysis of the frequency pictures which can be for example a Discrete Cosine Transformation or a Discrete Wavelet Transformation.

Also, the process is not limited to the coding of images having two different resolutions. In case the images are coded with only one resolution, the coding modes corresponding to the prediction block at lower resolution or prediction motion vector of the corresponding block at lower resolution are not part of the selection.

The process was described for a region by region or block by block motion estimation. Such an estimation can also be implemented pixel by pixel, for example by using the PEL-recursive estimation.

The process can relate to the calculation of all the L images at the different temporal levels or only the ones at a given temporal level.

### Claims

1. Method for coding video data of a sequence of pictures comprising a temporal analysis (1) implementing a motion compensated temporal filtering of pictures according to motion vectors between pictures, said filtering comprising, to get a high frequency band picture H (9) at a temporal level I, a predict step implementing high pass motion compensated temporal filtering of source or L pictures (7, 8) at lower temporal level I-1, **characterized in that**, to calculate a region or a pixel of a low frequency band picture L (10) at a temporal level I, it implements an update step which is a selection among at least the following coding modes :

   - a default coding mode which doesn't use the motion compensation for the calculation of the region or the pixel if the region or pixel is not connected or which performs a low pass motion compensated temporal filtering of picture H (9) of same level if the region or pixel is connected,
   - an update_MV coding mode which performs a low pass motion compensated temporal filtering of picture H (9) of same level according to a default motion vector calculated by taking into account motion vectors belonging to regions or pixels in the vicinity of the region or pixel to be calculated.

2. Process according to claim 1, **characterized in that** the default motion vector is a first default motion vector calculated as a function of the motion vectors of regions or pixels in the vicinity.

3. Process according to claim 1, **characterized in that** the default motion vector is a second default motion vector which is a refined motion vector calculated by performing a motion estimation within an area of the H picture having a predetermined size, around the position corresponding to a prediction motion vector calculated as a function of the motion vectors in the vicinity.

4. Process according to claim 1, the temporal decomposition being carried out on images at different spatial resolution levels, **characterized in that** the coding mode is selected among another coding mode which performs a low pass motion compensated temporal filtering taking into account a third default motion vector per region or per pixel, calculated as a function of the motion vector attributed to the corresponding region or pixel of the corresponding picture at lower resolution.

5. Process according to claim 1, the temporal decomposition being carried out on images at different spatial resolution levels, **characterized in that** the coding mode is selected also among another coding mode which performs a low pass motion compensated temporal filtering taking into account a fourth default motion vector per region or per pixel, which is a refined motion vector calculated by performing a motion estimation within a area having a predetermined size, around the position corresponding to a prediction motion vector calculated as a function of the motion vector attributed to the corresponding region or pixel of the corresponding picture at lower resolution.

6. Process according to claims 1 to 5, **characterised in that** the selection is made at least among two of the coding modes corresponding to the first, second, third and fourth default motion vector.

7. Process according to claim 1, **characterized in that** another coding mode for the selection is the following:

   - intra mode which consists in using a previously coded region or block of the L image as a predictor for the coding of the current region or block.

8. Process according to claim 1, the temporal decomposition being carried out on images at different spatial resolution levels, **characterized in that** another coding mode for the selection is the following:

   - interlayer_pred mode which consists in using the corresponding low resolution region or block as a predictor for the coding of the current high resolution region or block.

9. Process according to claim 1, **characterized in that** a default motion vector for a pixel of a block is defined through a weighting matrix by weighting the inverse motion vector attributed to the block and inverse motion vectors attributed to blocks in the vicinity, the weighting values depending on the position of the pixel within the block.

10. Process according to claim 1, **characterized in that** a default motion vector for a pixel of a block is defined through parameters of an affine function, such affine function being calculated, for the block, according to inverse motion vectors pointing within this block.

11. Process according to claim 1, **characterized in that** a default motion vector for a pixel of a block is defined by the affine functions

$$u = a + bx + cy$$

$$v = d + ex + fy$$

where u and v are the components of the motion vector, x and y are the positions of the pixel within the block and a, b, c, d, e, f are parameters calculated by performing a mean square estimation or a robust regression taking into account inverse motion vectors pointing within the block.

12. Process according to claim 1, **characterized in that** the coding mode selection is a function of a criterion depending on the coding cost of the mode and/or the distortion of the reconstructed region or, for a pixel belonging to an image block, the reconstructed block.

13. Process according to claim 1, **characterised in that** it implements a discrete wavelet transform through the motion compensated temporal filtering.

**14.** Device for the coding of video data according to the process of claim 1, comprising a temporal analysis circuit (1) to perform MCTF filtering of pictures, **characterized in that** said circuit comprises coding means for the coding of a region or a pixel of an L picture at a temporal level I according to an update_MV coding mode using a default motion vector.

**15.** Method for decoding video data coded according to the process of claim 1, comprising a temporal synthesis motion compensated temporal filtering (20), **characterized in that**, for a temporal level and for an update step, said filtering performs an update_MV decoding mode using a default motion vector.

**16.** Device for the decoding of video data coded according to the process of claim 1, comprising a temporal synthesis circuit (20) for performing a temporal synthesis MCTF filtering, **characterized in that** said circuit comprises decoding means for performing, for a temporal level and for an update step, an update_MV decoding mode using a default motion vector.

**FIG. 1**

**FIG. 2**

Original GOP

temporal level 1

$H_1$ $H_2$ $H_3$ $H_4$ $H_5$ $H_6$ $H_7$ $H_8$ Update

Predict

temporal level 2

$LH_1$ $LH_2$ $LH_3$ $LH_4$ Update

Predict

temporal level 3

$LLH_1$ $LLH_2$ Update

Predict

temporal level 4

LLLH

Update

LLLL

**FIG.3**

12

11

**FIG.4**

**FIG.5**

Upsampling

**FIG.6**

**FIG.7**

binary stream → entropy decoding (20) → spatial synthesis (22) → temporal synthesis (23) → post-filtering (24) → decoded video

entropy decoding → motion decoding (21) → temporal synthesis

**FIG.8**

**European Patent Office**

**EUROPEAN SEARCH REPORT**

Application Number

EP 06 30 0238

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHWARZ H ET AL: "MCTF AND SCALABILITY EXTENSION OF H. 264/AVC" FRAUNHOFER INSTITUT, 15 December 2004 (2004-12-15), XP002368924 | 1,14-16 | INV. H04N7/26 |
| Y | * the whole document * | 2-8,12, 13 | |
| Y | SCHWARZ H ET AL: "SNR-scalable Extension of H.264/AVC" JOINT VIDEO TEAM (JVT) OF ISO/IEC MPEG & ITU-T VCEG (ISO/IEC JTC1/SC29/WG11 AND ITU-T SG16 Q6), XX, XX, 2 September 2003 (2003-09-02), pages 1-17, XP002306318 Chapters 2.1 and 3.2 | 2-8,12, 13 | |
| Y | SCHWARZ H ET AL: "Scalable Extension of H.264/AVC" ISO/IEC JTC1/CS29/WG11 MPEG04/M10569/S03, XX, XX, March 2004 (2004-03), pages 1-39, XP002340402 Chapters 3.1.3 and 3.2.3 | 8 | |
| A | CHEN P ET AL: "BIDIRECTIONAL MC-EZBC WITH LIFTING IMPLEMENTATION" IEEE TRANSACTIONS ON CIRCUITS AND SYSTEMS FOR VIDEO TECHNOLOGY, IEEE SERVICE CENTER, PISCATAWAY, NJ, US, vol. 14, no. 10, October 2004 (2004-10), pages 1183-1194, XP001201781 ISSN: 1051-8215 Chapters IV-V | 1-8, 12-16 | |

TECHNICAL FIELDS SEARCHED (IPC)

H04N

-/--

The present search report has been drawn up for all claims

| Place of search | Date of completion of the search | Examiner |
|---|---|---|
| Munich | 1 September 2006 | Lindgren, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 06 30 0238

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/190979 A1 (LI SHIPENG ET AL) 1 September 2005 (2005-09-01) * abstract * * paragraph [0076] * * paragraphs [0091] - [0111] * | 1-8, 12-16 | |
| A | REICHEL J ET AL: "Scalable Video Model 3.0" ISO/IEC JTC1/SC29/WG11 N6716, XX, XX, October 2004 (2004-10), pages 1-85, XP002341767 Chapter 2.2 Chapters 3.3-3.4 Chapter 4.3 | 1-8, 12-16 | |
| A | OHM J-R ED - INSTITUTE OF ELECTRICAL AND ELECTRONICS ENGINEERS: "Motion-compensated 3-D subband coding with multiresolution representation of motion parameters" PROCEEDINGS OF THE INTERNATIONAL CONFERENCE ON IMAGE PROCESSING (ICIP) AUSTIN, NOV. 13 - 16, 1994, LOS ALAMITOS, IEEE COMP. SOC. PRESS, US, vol. VOL. 3 CONF. 1, 13 November 1994 (1994-11-13), pages 250-254, XP010146425 ISBN: 0-8186-6952-7 * abstract * Chapters 2-3 | 1-16 | |

TECHNICAL FIELDS
SEARCHED    (IPC)

-/--

The present search report has been drawn up for all claims

| Place of search | Date of completion of the search | Examiner |
|---|---|---|
| Munich | 1 September 2006 | Lindgren, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

**EP 1 835 749 A1**

| European Patent Office | EUROPEAN SEARCH REPORT | Application Number |
|---|---|---|
| | | EP 06 30 0238 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WIEGAND T ET AL: "OVERVIEW OF THE H.264/AVC VIDEO CODING STANDARD" IEEE TRANSACTIONS ON CIRCUITS AND SYSTEMS FOR VIDEO TECHNOLOGY, IEEE SERVICE CENTER, PISCATAWAY, NJ, US, vol. 13, no. 7, July 2003 (2003-07), pages 560-576, XP001169882 ISSN: 1051-8215 * abstract * Chapters IV(G)-(H) ----- | 1-16 | |
| | | | TECHNICAL FIELDS SEARCHED (IPC) |

The present search report has been drawn up for all claims

| Place of search | Date of completion of the search | Examiner |
|---|---|---|
| Munich | 1 September 2006 | Lindgren, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 30 0238

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2006

| Patent document cited in search report | Publication date | Patent family member(s) | Publication date |
|---|---|---|---|
| US 2005190979 A1 | 01-09-2005 | NONE | |

EPO FORM P0459

For more details about this annex : see Official Journal of the European Patent Office, No. 12/82